# EUROPEAN PATENT APPLICATION

(11) **EP 3 913 235 A1**
(43) Date of publication of application: **24.11.2021**
(21) Application number: 20175635.0
(22) Date of filing: 20.05.2020
(51) Int. Cl.: F16B 13/08

(54) **FASTENING DEVICE**

(71) Applicant: Hilti Aktiengesellschaft, 9494 Schaan (LI)
(72) Inventor: Doherty, Pauric, 6800 Feldkirch (AT)
(74) Representative: Hilti Aktiengesellschaft Corporate Intellectual Property

(57) **Abstract**

A fastening device (10) for fastening an object to a substructure in a fastening direction, comprising a frame (20) having a first hinge element (23), a gear rack (40) displaceably mounted to the frame and having a rack axis, a holder (30) having an abutment face (31) for abutting upon the object in the fastening direction, and a first arm (70) hinged to the first hinge element and pointing from the first hinge element in a first-arm direction and having a first counter-abutment face for abutting upon the substructure in a direction opposite to the fastening direction, wherein the first arm comprises a first pinion (73) engaging the gear rack such that a displacement of the gear rack along the rack axis causes a rotation of the first pinion.

## Description

### TECHNICAL FIELD

Described herein is a fastening device for fastening an object to a substructure in a fastening direction. Also described herein are associated parts and methods of use thereof.

### BACKGROUND ART

In many applications, there is the need to fasten to, or couple with, elements. One such application is fastening an object to a substructure in a fastening direction, therein using a fastening device for clamping the object to the substructure. A fastening device may comprise a bottom part, a clamp, and a screw with a nut, all parts loosely connected to each other before fastening.

One constraint with such fastening applications relates to handling. For large objects, such as gratings, the substructure may be difficult to access. In a first step, the clamp is inserted in an opening of the grating from a top side of the grating. Subsequently, one needs to ensure that the clamp is correctly positioned to engage the grating on the top side and the substructure on a bottom side of the grating. This may include a special three-dimensional movement of the fastening device which is complicated and time-consuming, and which requires a certain degree of experience by a worker. In a final step, the screw is tightened to make the clamp push the grating against the substructure.

Offering an alternative design that addresses some or all of the above constraints or at least offers the public a choice may be useful.

### SUMMARY

The above constraints are addressed by a fastening device for fastening an object to a substructure in a fastening direction, comprising a frame having a first hinge element, a gear rack displaceably mounted to the frame and having a rack axis, a holder having an abutment face for abutting upon the object in the fastening direction, and a first arm hinged to the first hinge element and pointing from the first hinge element in a first-arm direction and having a first counter-abutment face for abutting upon the substructure in a direction opposite to the fastening direction, wherein the first arm comprises a first pinion engaging the gear rack such that a displacement of the gear rack along the rack axis causes a rotation of the first pinion. Installing the fastening device from one side of the object may be safely and/or easily and/or quickly possible.

In a preferred embodiment, the first pinion is rotatable about the first hinge element between a mounting position and a fastening position, wherein in the mounting position, the first-arm direction is substantially parallel to the fastening direction, and wherein in the fastening position, the first-arm direction is substantially perpendicular to the fastening direction. When the first pinion is in the mounting position, the fastening device can easily be inserted in an opening of the object. When the first pinion is in the fastening position, the fastening device can safely engage the substructure.

In another preferred embodiment, the frame has a second hinge element, wherein the fastening device comprises a second arm hinged to the second hinge element and pointing from the second hinge element in a second-arm direction and having a second counter-abutment face for abutting upon the object in a direction opposite to the fastening direction and wherein the second arm comprises a second pinion engaging the gear rack such that a displacement of the gear rack along the rack axis causes a rotation of the second pinion. Thereby, the fastening device may be supported from behind by both the object and the substructure at the same time, which may result in a reduction of the force acting on the fastening device.

Preferably, the second pinion is rotatable about the second hinge element between a mounting position and a fastening position, wherein in the mounting position, the second-arm direction is substantially parallel to the fastening direction, and wherein in the fastening position, the second-arm direction is substantially perpendicular to the fastening direction. Likewise preferably, the first hinge element and the second hinge element are located on substantially opposite sides of the gear rack.

In another preferred embodiment, the frame comprises a bearing, wherein the gear rack is held in position with respect to the frame by the bearing. Preferably, the gear rack comprises a bearing section comprising a thread, wherein the bearing comprises a counter-thread engaging the thread. Likewise preferably, the gear rack comprises a gear section comprising a set of rack teeth, and wherein the first pinion comprises a set of first-pinion teeth engaging the set of rack teeth. Even more preferred, the second pinion comprises a set of second-pinion teeth engaging the set of rack teeth.

In another preferred embodiment, the holder comprises a hook for clasping the object.

In another preferred embodiment, at least one of the frame, the holder, the first arm and the second arm comprises a sheet metal part. In still another preferred embodiment, at least one of the frame, the holder, the first arm and the second arm has a U-shaped cross section.

### BRIEF DESCRIPTION OF THE DRAWINGS

Further aspects and advantages of the fastening tool, associated parts and a method of use thereof will become apparent from the ensuing description that is given by way of example only and with reference to the accompanying drawings in which:
- Fig. 1: illustrates a fastening device in a side-view from a first side,
- Fig. 2: illustrates the fastening device of Fig. 1 in a cross-sectional view from a second side perpendicular to the first side,
- Fig. 3: illustrates the fastening device of Fig. 1 in a cross-sectional view during fastening the object to the substructure,
- Fig. 4: illustrates the fastening device of Fig. 1 in a cross-sectional view during fastening the object to the substructure,
- Fig. 5: illustrates the fastening device of Fig. 1 in a cross-sectional view after fastening the object to the substructure, and
- Fig. 6: partly illustrates the fastening device of Fig. 1 in a cross-sectional view.

### DETAILED DESCRIPTION

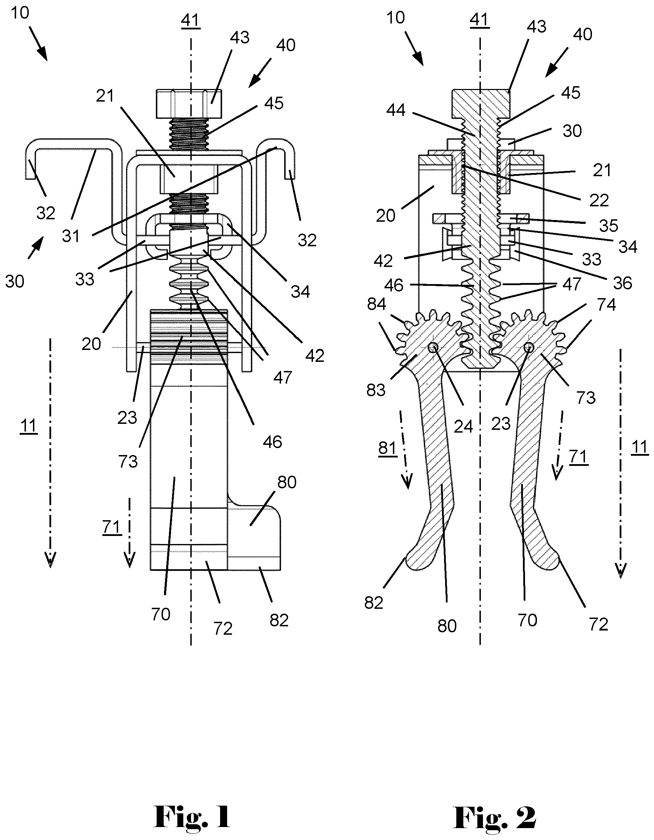

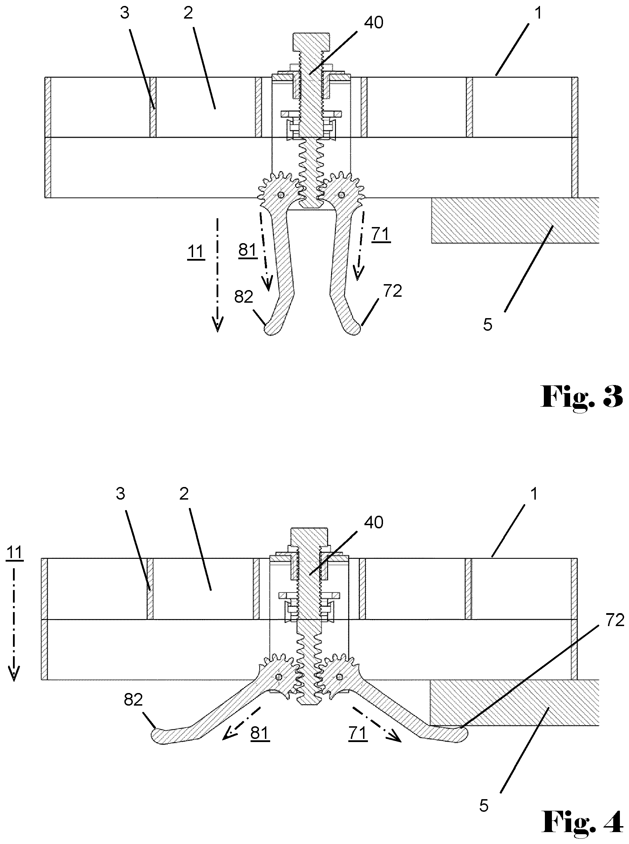

Figs. 1 and 2 show a fastening device 10 for fastening an object 1 to a substructure 5 in a fastening direction 11. As shown in Figs. 3-5, the object 1 is a grating having load bars 2 and cross bars 3. The substructure 5 may be a T-shaped beam or similar construction element, e.g. of a building such as a powerplant.

The fastening device 10 comprises a frame 20 made of a sheet metal part and having a generally U-shaped cross section with two legs. The fastening device 10 further comprises a holder 30 having two abutment faces 31 for abutting upon the object 1 in the fastening direction 11. The holder 30 comprises two hooks 32 each provided for clasping the object 1, particularly one of the load bars 2, respectively. Each of the hooks 32 is made of a sheet metal part and has a U-shaped cross section and a protrusion 33 extending through an opening 36 in the frame 20. The hooks are linked together via a link member 34 which extends through an opening of each of the hooks 32, respectively. In this way, the link member catches each of the hooks 32 and prevents them from falling apart from each other, or from the frame 20.

The fastening device 10 further comprises a gear rack 40 mounted to the frame 20. The gear rack 40 comprises a shaft 42 defining a rack axis 41 which is oriented in parallel to the fastening direction 11. In an upper end region of the shaft 42, the gear rack 40 comprises a head 43. The head 43 and the shaft 42 together form one single element. The head 43 may comprise a screw drive, such as a Phillips, external or internal Hex, Torx or similar drive, enabling rotational driving of the gear rack 40. In an upper region of the shaft 42, the gear rack 40 comprises a bearing section 44 comprising a thread 45, particularly formed as a male thread. In a lower region of the shaft 42, the gear rack 40 comprises a gear section 46 comprising a set of rack teeth 47.

The frame 20 comprises a bearing 21 holding the gear rack 40 in position with respect to the frame 20. The bearing 21 comprises a counter-thread 22, particularly formed as a female thread, engaging the thread 45 of the bearing section 44 of the gear rack 40. Rotating the gear rack 40 about the rack axis 41 displaces the gear rack 40, preferably linearly, with respect to the frame 20 along the rack axis 41. The link member 34 of the holder 30 has a central opening 35 providing a clearance for the gear rack 40 which extends and moves through the central opening 35.

The frame 20 comprises a first hinge element 23 and a second hinge element 24 (hidden behind the first hinge element 23 in Fig. 1) both interconnecting the two legs of the U-shaped cross section of the frame 20. The fastening device 10 comprises a first arm 70 hinged to the first hinge element 23 and pointing from the first hinge element 23 in a first-arm direction 71. The first arm 70 has a first counter-abutment face 72 for abutting upon the substructure 5 in a direction opposite to the fastening direction 11. The first counter-abutment face 72 has a round profile with a radius of curvature of at least 1 mm so as to ensure a good contact between the first counter-abutment face 72 and the substructure 5 at varying angles. Further, the first arm 70 comprises a first pinion 73 having a set of first-pinion teeth 74. The set of first-pinion teeth 74 engage the set of rack teeth 47 of the gear section 46 of the gear rack 40 such that a displacement of the gear rack 40 along the rack axis 41 causes a rotation of the first pinion 73 and the first arm 70 about the first hinge element 23.

Further, the fastening device 10 comprises a second arm 80 hinged to the second hinge element 24 and pointing from the second hinge element 24 in a second-arm direction 81. The second arm 80 has a second counter-abutment face 82 for abutting upon the object 1 in a direction opposite to the fastening direction 11. The second counter-abutment face 82 has a round profile with a radius of curvature of at least 1 mm so as to ensure a good contact between the second counter-abutment face 82 and the object 1 at varying angles. The second counter-abutment face 82 protrudes from the second arm 80 behind the frame 20 (to the right in Fig. 1). The second arm 80 comprises a second pinion 83 (hidden behind the first pinion 83 in Fig. 1) having a set of second-pinion teeth 84. The set of second-pinion teeth 84 engage the set of rack teeth 47 of the gear section 46 of the gear rack 40 such that a displacement of the gear rack 40 along the rack axis 41 causes a rotation of the second pinion 83 and the second arm 80 about the second hinge element 24.

The first arm 70 and the second arm 80 are each made of a metal part. As shown in Fig. 2, the first hinge element 23 and the second hinge element 24, and thus the first arm 70 and the second arm 80 are located on substantially opposite sides of the gear rack 40. The frame 20, by its U-shaped cross section, forms a passage providing a clearance for the first arm 70 and the second arm 80 during their rotating about the first hinge element 23 and the second hinge element 24, respectively.

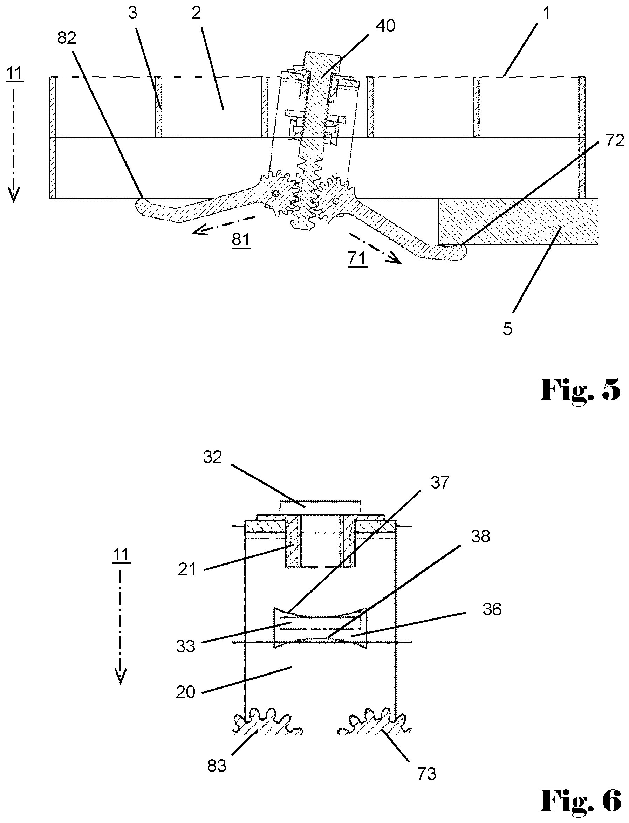

Figs. 3, 4, and 5 show the fastening device 10 during fastening the object 1 to the substructure 5. In a first step, the fastening device 10 is inserted in a straight movement in the fastening direction 11 into an opening of the object 1, until the holder 30 abuts upon one or two of the load bars 2 of the object 1 (Fig. 3). In a subsequent step (Fig. 4), the gear rack 40 is driven in a screwing-like motion in the fastening direction 11. Due to the engagement of the set of rack teeth 47 by the first-pinion teeth 74 and the second-pinion teeth 84, the first arm 70 and the second arm 80 rotate about the first hinge element 23 and the second hinge element 24, respectively, from a mounting position (shown in Figs. 1, 2, 3) in which the first-arm direction 71 and the second-arm direction 81 are substantially parallel to the rack axis 41, to a fastening position (shown in Figs. 4, 5) in which the first-arm direction 71 and the second-arm direction 81 are opposite to each other and substantially perpendicular to the rack axis 41. The gear rack 40 is driven so as to rotate the first arm 70 and the second arm 80 outwards until the first counter-abutment face 72 abuts the substructure 5 and the second counter-abutment face 82 abuts one of the load bars 2 of the object 1.

When the first pinion 73 and the second pinion 83, and thus the first arm 70 and the second arm 80, respectively, are in the mounting position, easy insertion of the fastening device in the opening of the object 1 is enabled. When the first pinion 73 and the second pinion 83, and thus the first arm 70 and the second arm 80, respectively, are in the fastening position, safe engagement behind the substructure 5 by the fastening device 10 is provided. In this way, the fastening device 10 is easily and safely installed from one side of the object 1. Furthermore, the fastening device 10 can easily be removed from the object 1 by simply driving the gear rack 40 in an opposite direction in order to lower the first and second arms 70, 80 and easily lift the fastening device 10 out of the object 1.

Fig. 6 shows some parts of the fastening device 10. As shown in Fig. 5, depending on a thickness in the fastening direction 11 of the substructure 5, the fastening device 10 tilts when the first counter-abutment face 72 and the second counter-abutment face 82 abut the substructure 5 and the object 1, respectively. In order to compensate for such tilting and provide for a plain rest by the holder 30 on the object 1, each of the openings 36 of the frame 20 comprises a curved, preferably spherically curved, upper edge 37 and a curved, preferably spherically curved, lower edge 38. The convex shape of the upper edge 37 and the lower edge 38, or concave shape of the opening 36, provides a clearance for the protrusion 33 of one of the hooks 32 when the frame 20 tilts with respect to the hooks 32.

The foregoing description of exemplary embodiments of the invention have been presented for purposes of illustration and of description. It is not intended to be exhaustive or to limit the invention to the precise form disclosed, and modifications and variations are possible in light of the above teachings or may be acquired from practice of the invention. The functionality described may be distributed among modules that differ in number and distribution of functionality from those described herein. Additionally, the order of execution of the functions may be changed depending on the embodiment. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto and their equivalents.

## Claims

1. A fastening device for fastening an object to a substructure in a fastening direction, comprising a frame having a first hinge element, a gear rack displaceably mounted to the frame and having a rack axis, a holder having an abutment face for abutting upon the object in the fastening direction, and a first arm hinged to the first hinge element and pointing from the first hinge element in a first-arm direction and having a first counter-abutment face for abutting upon the substructure in a direction opposite to the fastening direction, wherein the first arm comprises a first pinion engaging the gear rack such that a displacement of the gear rack along the rack axis causes a rotation of the first pinion.

2. A fastening device according to claim 1, wherein the first pinion is rotatable about the first hinge element between a mounting position and a fastening position, wherein in the mounting position, the first-arm direction is substantially parallel to the fastening direction, and wherein in the fastening position, the first-arm direction is substantially perpendicular to the fastening direction.

3. A fastening device according to any of claims claim 1 and 2, wherein the frame has a second hinge element, wherein the fastening device comprises a second arm hinged to the second hinge element and pointing from the second hinge element in a second-arm direction and having a second counter-abutment face for abutting upon the object in a direction opposite to the fastening direction and wherein the second arm comprises a second pinion engaging the gear rack such that a displacement of the gear rack along the rack axis causes a rotation of the second pinion.

4. A fastening device according to claim 3, wherein the second pinion is rotatable about the second hinge element between a mounting position and a fastening position, wherein in the mounting position, the second-arm direction is substantially parallel to the fastening direction, and wherein in the fastening position, the second-arm direction is substantially perpendicular to the fastening direction.

5. A fastening device according to any of claims 3 and 4, wherein the first hinge element and the second hinge element are located on substantially opposite sides of the gear rack.

6. A fastening device according to any of the preceding claims, wherein the frame comprises a bearing, and wherein the gear rack is held in position with respect to the frame by the bearing.

7. A fastening device according to claim 6, wherein the gear rack comprises a bearing section comprising a thread, and wherein the bearing comprises a counter-thread engaging the thread.

8. A fastening device according to any of the preceding claims, wherein the gear rack comprises a gear section comprising a set of rack teeth, and wherein the first pinion comprises a set of first-pinion teeth engaging the set of rack teeth.

9. A fastening device according to claims 2 and 8, wherein the second pinion comprises a set of second-pinion teeth engaging the set of rack teeth.

10. A fastening device according to any of the preceding claims, wherein the holder comprises a hook for clasping the object.

11. A fastening device according to any of the preceding claims, wherein at least one of the frame, the holder, the first arm and the second arm comprises a sheet metal part.

12. A fastening device according to any of the preceding claims, wherein at least one of the frame, the holder, the first arm and the second arm has a U-shaped cross section.
